# EUROPEAN PATENT SPECIFICATION

(11) **EP 0 457 990 B1**
(45) Date of publication and mention of the grant of the patent: **22.11.1995**
(21) Application number: 90313160.5
(22) Date of filing: 04.12.1990
(51) Int. Cl.: G06F 3/033

(54) **Interactive data processing apparatus using a pen**
Interaktives Datenverarbeitungsgerät mit Griffel
Appareil de traitement de données interactif utilisant un crayon

(30) Priority: 05.12.1989 JP 316109/89
(43) Date of publication of application: 27.11.1991
(73) Proprietor: SONY CORPORATION, Tokyo 141 (JP)
(72) Inventor: Hirayama, Tomoshi, c/o Patents Division, Shinagawa-ku, Tokyo 141 (JP); Yasuhara, Hiroshi, c/o Patents Division, Shinagawa-ku, Tokyo 141 (JP)
(74) Representative: Harris, Ian Richard

(56) References cited:
- IEEE COMPUTER GRAPHICS AND APPLICATIONS, vol. 8, no. 5, September 1988, NEW YORK, US; pages 65-84; BRAD A. MYERS: ' A Taxonomy of Window Manager User Interfaces'
- Macintosh System Software - User's Guide, Version 6.0, Apple Computer Inc., Cupertino, CA, 1988
- PATENT ABSTRACTS OF JAPAN, vol. 12, no. 138, (P-695), April 27, 1988

## Description

The invention relates to data processing apparatus and, more particularly, is directed to controlling the inputting of information to data processing apparatus.

Conventionally, a keyboard, a mouse and/or the like are generally used as an information input control apparatus of a computer. For example, if the user wants to enlarge a window of an icon on a picture screen of a display portion such as a cathode ray tube (CRT) or the like by using a mouse, the mouse can be made operable on a tablet and a cross-shaped position designation cursor is moved on the picture screen of the display portion by moving the mouse. When a button on the mouse or a predetermined key on a keyboard is depressed once in order to specify a desired icon after the position designation cursor is matched with the desired icon displayed on the picture screen of the CRT, a trigger operation for taking in the icon is executed by a central processing unit (CPU) of the computer. Further, when the user wants to enlarge the window of the desired icon, the mouse button is depressed one more time, or the mouse is moved to the position at which the window is enlarged on the tablet and the mouse button is depressed one more time at that position, the window of the icon thereby being enlarged as is commanded by the user.

With such an information input control apparatus, the user must carry out two operations, namely the trigger operation for designating the desired icon and the operation for displaying the window of the icon at the predetermined position on the enlarged scale, which is very cumbersome for the user. Also, the mouse is too large for easily moving the cursor to the exact position of the desired icon properly.

A data managing device which uses a pen for the selection of items is described in the abstract of JP-62-260264 on page 695 of Patents Abstracts of Japan, vol 12, Number 138, 27 April 1988. As described therein, on contact between a memo icon and a pen, the whole memo is caused to be displayed. However, a problem with such an arrangement is that the inadvertent display of information can easily result from an incorrect selection.

According to one aspect of the invention there is provided a data processing apparatus comprising:
an input device and a display device mounted one upon the other;
a pen;
means for detecting whether or not a point of the pen is touched down;
means responsive to data indicative of a coordinate position at which the point of the pen is initially touched down corresponding to a coordinate position at which an icon is displayed on the display device to select said icon;
means for controlling the icon display coordinate position such that the icon display coordinate position is moved in accordance with movement of the coordinate position of the touched-down point of the pen from the initial touch down position;
means for detecting whether or not the coordinate position of the touched-down point of the pen is then moved to a predetermined area; and
means for converting the icon into a window when it is detected that the point of the pen is lifted off within said predetermined area.

According to another aspect of the invention there is provided a data processing apparatus comprising:
an input device and a display device mounted one upon the other;
a pen;
means for detecting whether or not a point of the pen is touched down;
means responsive to data indicative of a coordinate position at which the point of the pen is initially touched down corresponding to a coordinate position at which a window is displayed on the display device to select said window;
means for controlling the window display coordinate position such that the window display coordinate position is moved in accordance with movement of the coordinate position of the touched-down point of the pen;
means for detecting whether or not the coordinate position of the touched-down point of the pen is then moved to a predetermined area; and
means for converting the window into an icon when it is detected that the point of the pen is moved up within said predetermined area.

According to a further aspect of the invention there is provided a method of controlling the input of information to a data processing apparatus comprising: an input device and a display device mounted one upon the other; and a pen; the Method comprising:
detecting whether or not a point of the pen is touched down;
responding to data indicative of a coordinate position at which the point of the pen is initially touched down corresponding to a coordinate position at which an icon is displayed on the display device to select said icon;
controlling the icon display coordinate position such that the icon display coordinate position is moved in accordance with movement of the coordinate position of the touched-down point of the pen from the initial touch down position;
detecting whether or not the coordinate position of the touched-down point of the pen is then moved to a predetermined area; and
converting the icon into a window when it is detected that the point of the pen is lifted off within said predetermined area.

According to another further aspect of the invention there is provided a method of controlling the input of information to a data processing apparatus comprising: an input device and a display device mounted one upon the other; a pen; the method comprising:
means for detecting whether or not a point of the pen is touched down;
responding to data indicative of a coordinate position at which the point of the pen is initially touched down corresponding to a coordinate position at which a window is displayed on the display device to select said window;
controlling the window display coordinate position such that the window display coordinate position is moved in accordance with movement of the coordinate position of the touched-down point of the pen;
detecting whether or not the coordinate position of the touched-down point of the pen is then moved to a predetermined area; and
converting the window into an icon when it is detected that the point of the pen is lifted off within said predetermined area.

A data processing apparatus embodying the invention and described in detail hereinbelow can eliminate or reduce the aforenoted shortcomings and disadvantages encountered with the prior art. Thus, the user can activate or deactivate a designated function by dragging a pen. Also, a starting or ending position of a dragging operation can be designated naturally. Further, a position of a window, that is a position of, for example, an enlarged icon, can be determined with ease.

The invention will now be further described, by way of illustrative and non-limiting example, with reference to the accompanying drawings, in which like reference numerals are used to identify the same or similar parts throughout, and in which:
Figure 1 shows a data processing apparatus embodying the invention;
Figure 2 is a block diagram showing hardware of the data processing apparatus;
Figures 3A and 3B are views of a display screen of a display portion of the data processing apparatus; and
Figures 4A and 4B are flow charts illustrating the operation of the data processing apparatus.

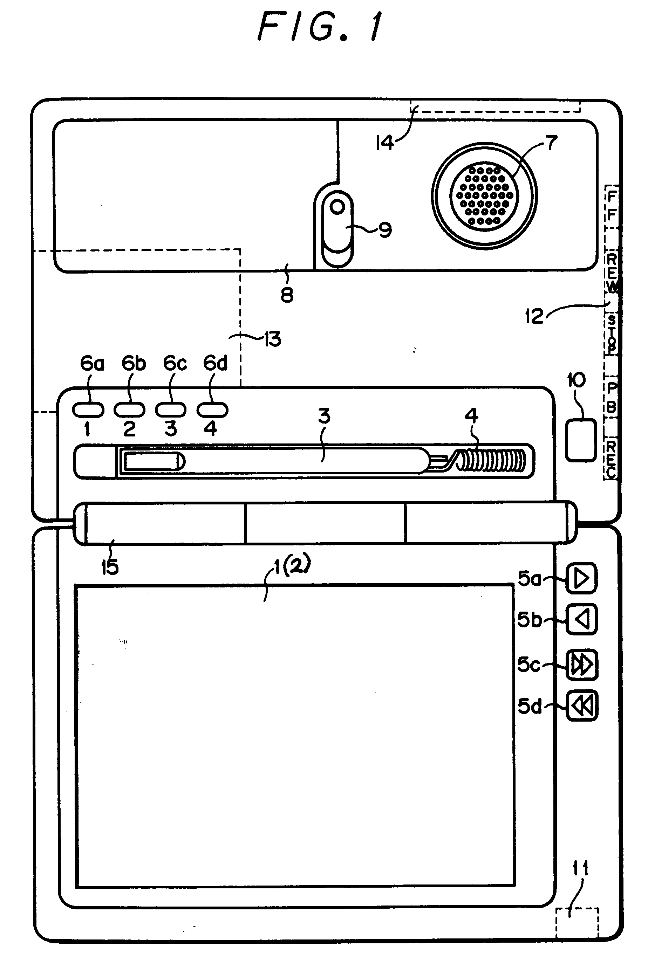

A data processing apparatus embodying the invention will now be described in detail with reference to Figures 1 to 4. Figure 1 is a front (user) view of the data processing apparatus. In this case, the data processing apparatus is embodied, for example, in the form of a so-called portable computer of very small type.

As shown in Figure 1, the data processing apparatus has a lower portion including a display portion or apparatus 1 formed as a liquid crystal display (LCD) device or the like. The display portion 1 displays thereon video image data from a central processing unit (CPU) of the computer, which will be described later. An input apparatus, that is an input tablet 2 formed as a so-called transparent touch sensor or the like, is mounted on (e.g. stuck to) a surface of the display portion 1.

An electronic pen 3 is used to input desired data or the like in cooperation with the input tablet 2. The pen 3 incorporates therein a sensing or detecting means (not shown) for detecting a change of electrostatic capacity between the input tablet 2 and the point of the pen 3. Coordinate position data of the pen 3 can be detected even when the point of the pen 3 is not brought into contact with the surface of the input tablet 2, and a marker (not shown) is displayed on the display portion 1 at a position thereon at which the point of the pen 3 is opposed to the input tablet 2. When the user holds the pen 3 and touches the input tablet 2 with the point of the pen 3, that is, "touches down" the point of the pen, items of information such as a contact condition, the contact position and so on are supplied through a cord 4 or the like to the CPU, thereby inputting desired data or the like. Signals can also be supplied to the CPU from predetermined key switches 5a, 5b, 5c, 5d and 6a, 6b, 6c, 6d.

A speaker 7 is provided on an upper portion of the data processing apparatus, together with a battery accommodating portion 8 which can accommodate a power source battery inside a lid which can be opened and closed by a locking mechanism 9. A power switch 10 powers the data processing apparatus when it is depressed.

Dashed lines on the upper and lower portions of Figure 1 represent positions of mechanisms and the like provided at the side of the data processing apparatus. A dashed line block 11 represents a microphone and dashed line blocks 12 represent operation keys that are used to effect solid state recording which will be described later. When a record operation key 12 is operated, an audio signal fed to the microphone 11 is recorded and emanates from the speaker 7. A dashed line block 13 represents a socket into which an integrated current (IC) card such as a read only memory (ROM), a random access memory (RAM) or the like can be inserted and operatively connected to the apparatus. A dashed line block 14 represents the position of a socket which is used to connect the data processing apparatus with external apparatus when the user wants to expand the system of the data processing apparatus.

A hinge 15 incorporates therein a flexible substrate or the like via which a signal can be transmitted. By means of the hinge 15, the data processing apparatus can be folded into its two (upper and lower) portions without being affected by difficulties from an electrical standpoint. When the data processing apparatus is in use, it measures about 29 cm long and about 20.5 cm wide in its unfolded state and is about 4 cm thick in its folded state. The display portion 1 is about 15 cm wide and about 10 cm long.

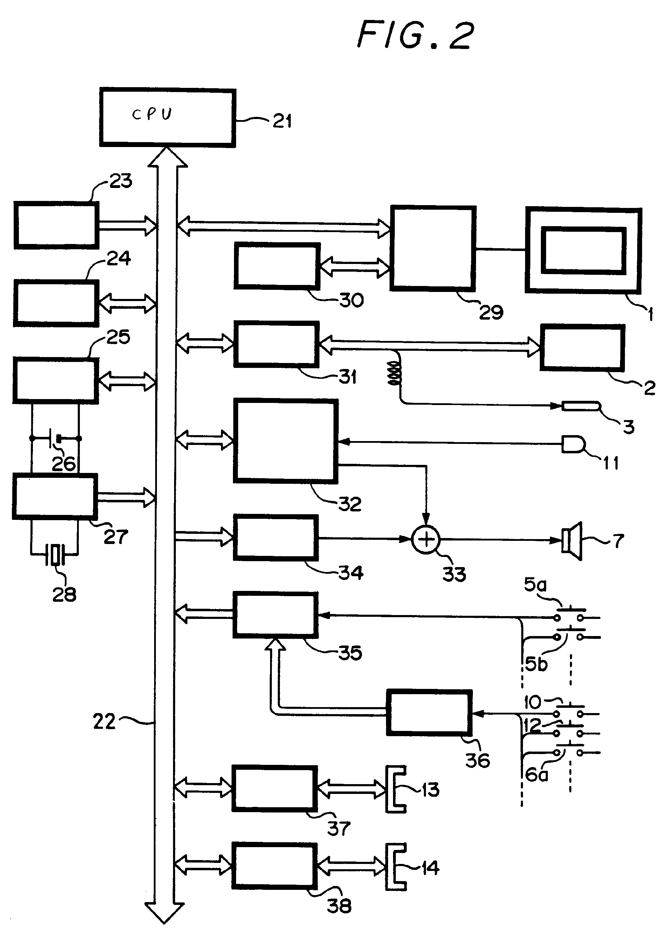

Figure 2 is a block diagram of the hardware incorporated in the data processing apparatus. The CPU is designated 21 and, as outlined below, is connected to various function ICs by way of a bus line 22.

A ROM 23 is connected to the CPU 21 and the ROM 23 stores therein, in addition to a system program for the entire system of the data processing apparatus, a Japanese syllabary(kana)-Japanese character(kanji) conversion program for a word processor for the Japanese language and dictionary data, a recognition program for recognising hand-written input, and dictionary data and so on.

A RAM 24 is used as a RAM work area and a backup RAM 25 is connected to a power source 26.

A timer IC 27 is driven by the power source 26. The timer IC 27 counts a clock signal from a quartz oscillator 28 and always outputs data of date and time at each timing point.

The hardware of the data processing apparatus will now be described in association with the connection relations of the respective portions shown in Figure 1.

A display controller 29 is operative to control the display portion 1. The display controller 29 is controlled by the CPU 21 and display data formed by the CPU 21 is written in a video RAM (V-RAM) 30. The data written in the V-RAM 30 is supplied to the display portion 1 through the display controller 29.

A tablet interface circuit 31 is formed unitarily with the display portion 1 for the input tablet 2 and the pen 3. Data written to the input tablet 2 or the like is supplied to the CPU 21 by means of the tablet interface circuit 31.

A solid state recording processing circuit 32 is operative to process an audio signal from the microphone 11 in a predetermined manner, such as by subjecting it to analog-to-digital (A/D) conversion or the like, and the thus-processed signal is written in the backup RAM 25 via the CPU 21. Audio signal data stored in the backup RAM 25 is supplied to the processing circuit 32, in which it is processed in a predetermined manner, such as by subjecting it to digital-to-analog (D/A) conversion or the like. The thus-processed signal is supplied to the speaker 7 via a mixer 33.

A dialler circuit 34 is operative to generate an acoustic signal corresponding to a dual tone signal of a so-called push-phone when receiving data representing a desired telephone number or the like from the CPU 21. This signal is supplied through the mixer 33 to the speaker 7.

A key interface circuit 35 is supplied with a signal from the key switch group such as the above-described key switches 5a to 5d, 6a to 6d, 10 and 12 or the like either directly or by way of a power source circuit 36. The signal, converted in the predetermined manner, is supplied from the key interface circuit 35 to the CPU 21. Signals from the power switch 10, the key switches 6a to 6d and the operation keys 12 (except a stop button) are supplied to the key interface circuit 35 through the power source circuit 36 so that, when these key switches are operated, the power source circuit 36 is actuated first and then information generated by key operation is supplied to the key interface circuit 35.

An interface circuit 37 and an interface circuit 38 are operative to couple the IC cards to the external apparatus upon expansion. The interface circuits 37 and 38 are coupled to the sockets 13 and 14, respectively.

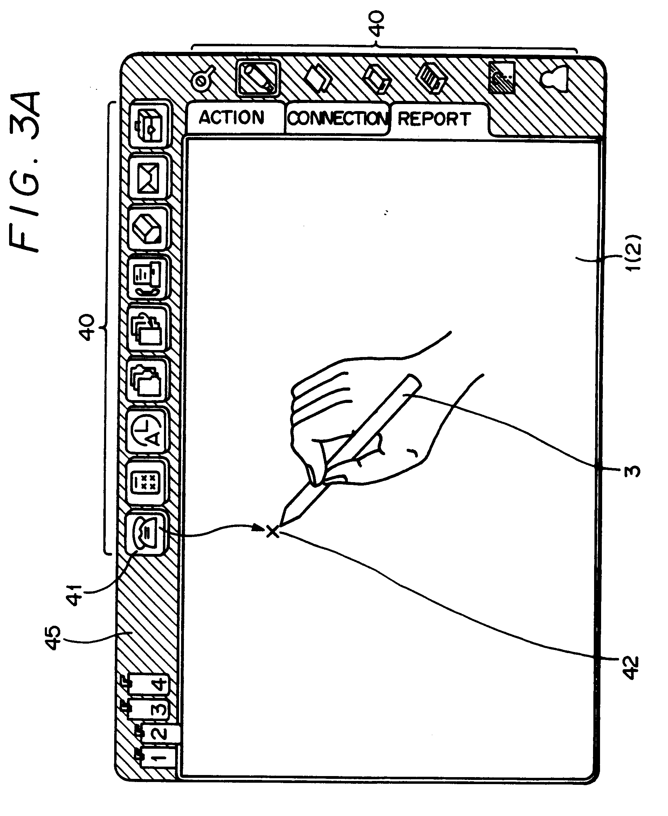

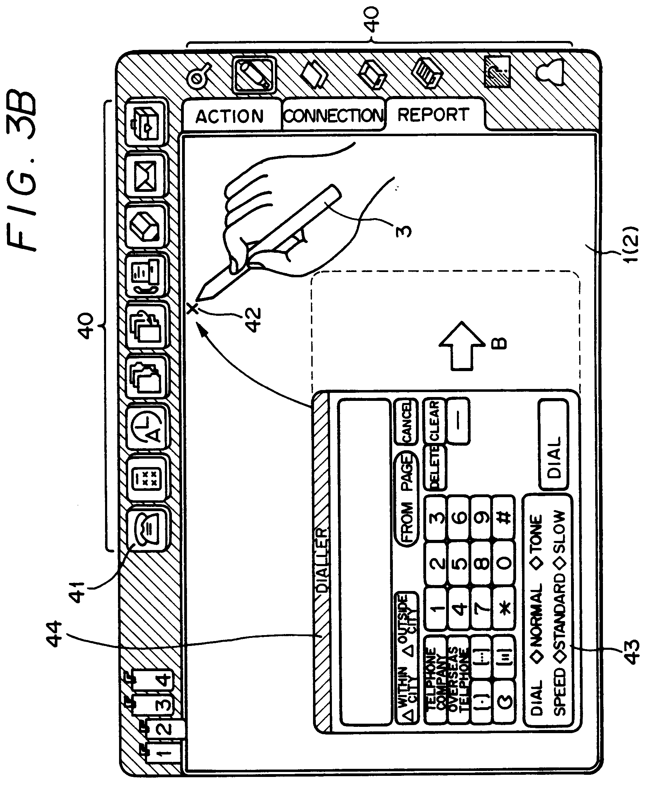

In the above-described data processing apparatus, when the power switch 10 shown in Figure 1 is depressed, groups 40 of icons which make various processing operations possible are displayed on the display portion 1 as shown in Figure 3A. When a desired processing operation, for example a dialler processing operation, is to be selected from the icon groups 40 for execution, the user touches an icon 41 of one of the groups 40, on which a picture of a telephone is drawn, with the point of the pen 3. A cross-shaped position designating cursor 42 is displayed on the picture screen of the display portion 1 when the point of the pen 3 approaches the panel surface of the display portion 1 serving as the input tablet 2, whereby the user can visually confirm the exact position of the point of pen 3 on the input tablet 2 very clearly. Then, if the user moves (that is, drags) the point of the pen 3 to a display position on the surface of the input tablet 2 without breaking contact between the surface and the point of the pen after having touched the desired icon 41 with the point of the pen, and moves the point of the pen 3 away from the surface of the input tablet 2, an icon (hereinafter referred to as a window), enlarged in the form of a processing display mode of the desired icon 41, is automatically displayed on the display portion 1 as shown in Figure 3B.

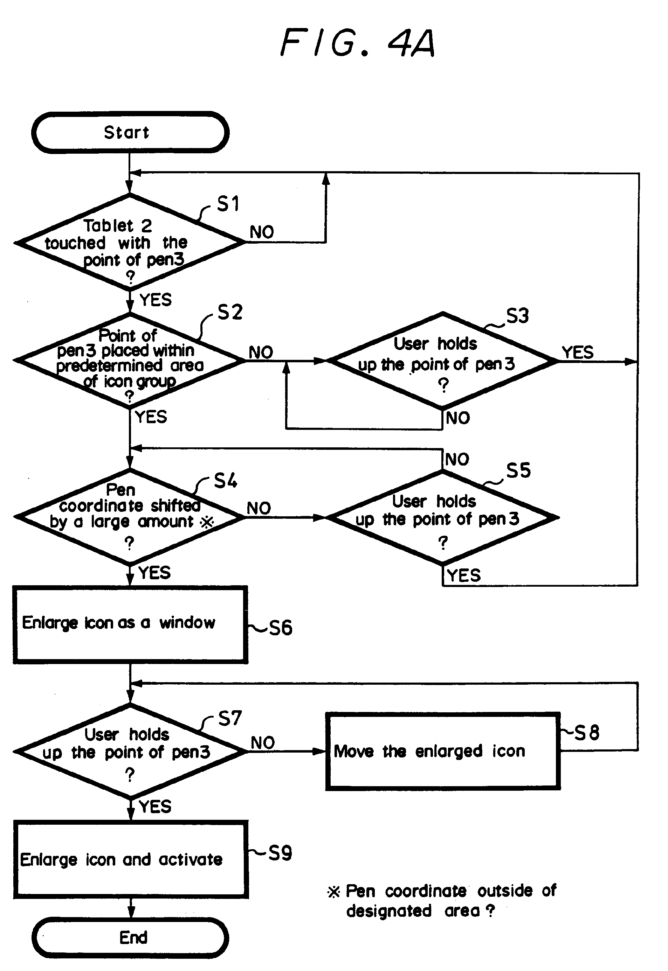

This operation, which is carried out by the CPU 21 shown in Figure 2, will now be explained more fully with reference to a flow chart shown as Figure 4A.

Referring to Figure 4A, following the Start of operation, the CPU 21 determines in a decision step S1 whether or not the user has touched down the point of the pen 3 on the surface of the input tablet 2. When the input tablet 2 is touched with the point of the pen 3, a switch (not shown) provided within the pen 3 is operated, which provides an operation signal which is transmitted to the CPU 21 through the tablet interface circuit 31. If the input tablet 2 is not touched by the point of the pen 3, as represented by a NO output at the step S1, the routine returns to the step S1. If, on the other hand, the input tablet 2 is touched by the point of the pen 3, as represented by a YES output at the step S1, the routine proceeds to a decision step S2. It is determined in the step S2 whether or not the point of the pen 3 has been set down within a predetermined area occupied by the icon groups 40. If a NO is outputted at the step S2, the routine proceeds to a decision step S3. It is determined in the step S3 whether or not the user is holding up the pen 3, that is whether the point has been moved up (lifted off) so that it is out of contact with the surface of the input tablet 2. If a YES is outputted at the step S3, the routine returns to the step S1. If a NO is outputted at the step S3, the routine returns to the step S3. During this period, other operations, except for an operation in which the icon is enlarged (enlarged in the form of a window) are executed. If the point of the pen 3 is set or touched down within the area of the icon group 40 as represented by a YES output at the step S2, the routine proceeds to a decision step S4 at which it is determined whether or not the pen coordinate position is shifted from a designated value (position) by a large amount. This decision is made by comparing the amount of shift of the pen coordinate position with a reference shift amount stored in memory, such as the ROM 23 or the like. Alternatively, it may be determined in the step S4 whether or not the pen coordinate position is out of a designated area, as shown by an asterisk. In that case, the decision is made by comparing the amount of shift with the designated area stored in the memory.

If a NO is outputted at the step S4, the routine proceeds to a decision step S5 at which it is determined whether or not the user is holding up the pen 3 so that its point is away from the surface of the input tablet 2. If a NO is outputted at the step S5, the routine returns to the step S4. If a YES is outputted at the step S5, the routine returns to the step SI. If the pen coordinate position is considerably shifted from the reference amount or if the pen coordinate position is outside of the predetermined designated area (e.g. the area shown hatched in this embodiment) as represented by a YES output at the step S4, the routine proceeds to a step S6. In the step S6, the processing display form of the designated icon 41 is enlarged as a window 43 shown in Figure 3B. Under this state the point of the pen 3 is touching the panel surface of the input tablet 2 so that, even if the user touches one of various processing menus displayed on the window 43, the CPU 21 is inhibited from being operated.

Then, the processing of the CPU 21 proceeds to a decision step S7 at which it is determined whether or not the user is holding up the point of the pen 3 away from the panel surface of the input tablet 2. If a NO is outputted at the step S7, the routine proceeds to a step S8. In the step S8, if the user wants to move the window 43 as shown, for example, in Figure 3B, to a central position of the display portion 1, that is to move the window in the direction shown by an arrow B in Figure 3B, the user moves (drags) the point of the pen 3 in the direction of the arrow B whereby the large display icon, that is the window 43, is moved (dragged) to the position shown by a broken line in Figure 3B. Upon completion of the step S8, the routine, of course, returns to the step S7. If it is determined that the user is holding up the point of the pen 3 away from the panel surface of the input tablet 2 as represented by a YES output at the step S7, the processing proceeds to a step S9 at which the icon is activated so that the various processing menus within the window 43 can be executed. Then, the routine is ended.

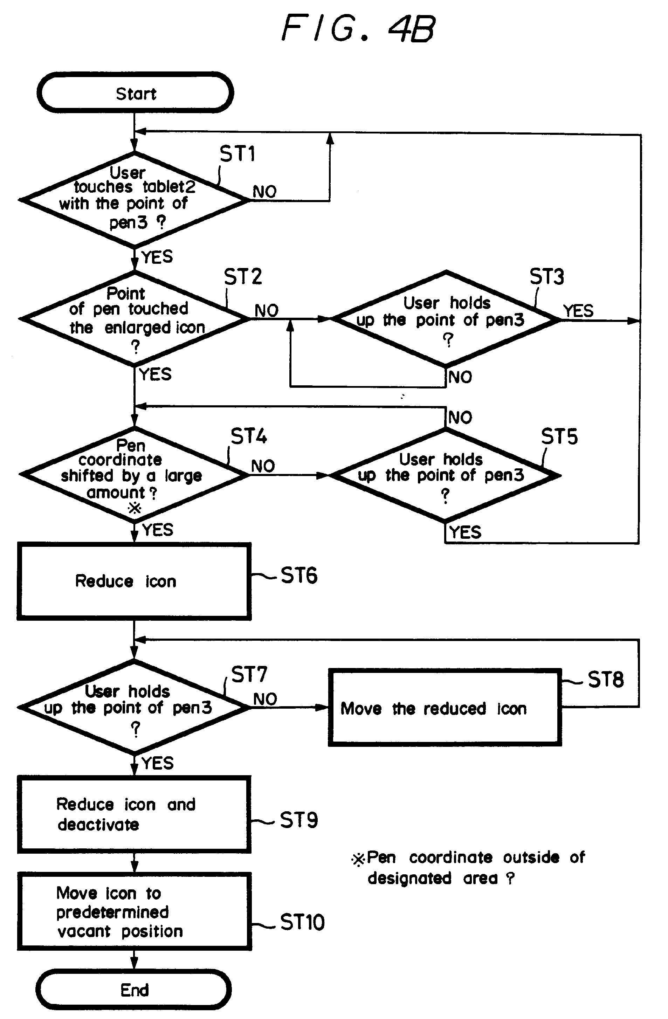

When the user wants to bring the large icon, that is the window 43 displayed on the display portion 1 as shown in Figure 3B, back to its original position, he touches a portion other than a function operation portion, for example a hatched upper edge portion 44 within the window 43, with the point of the pen 3 and drags the point of the pen 3 back to the telephone icon 41 of the original icon group 40 without breaking contact between the point of the pen and the tablet, whereby the icon of large size is dragged to be returned to and stored in that position. To carry out this operation, the pen 3 need not always be returned to the telephone icon 41. Instead, the pen 3 can be returned to a predetermined icon in the icon group 40, whereupon the window can automatically be stored in a vacant icon position. The above-mentioned operation will be explained more fully with reference to the flow chart shown as Figure 4B.

Referring to Figure 4B, following the Start of operation, the CPU determines in a decision step ST1 whether or not the user is touching the input tablet 2 with the point of the pen 3. If a NO is outputted at the step ST1, the routine returns to the decision step ST1. If, on the other hand, a YES is outputted at the step ST1, the routine proceeds to a decision step ST2. It is determined in the decision step ST2 whether or not the point of the pen 3 is touching the large icon, that is the upper edge portion 44 of, for example, the window 43 shown in Figure 3B and the point of the pen 3 is located within the predetermined area except for the function button group of the window 43. If a NO is outputted at the step ST2, the routine proceeds to a step ST3 at which processing similar to that of the step S3 of Figure 4A is performed. If the point of the pen 3 is located within the window 43 as represented by a YES output at the step ST2, the routine proceeds to steps ST4 and ST5. The steps ST4 and ST5 are similar to the steps S4 and S5 of Figure 4A. If a YES is outputted at the step ST4 if the pen coordinate position is shifted from the designated value by a very large amount or if the point of the pen 3 is outside of the designated area, the routine proceeds to a step ST6 at which the icon (the window in this case) is reduced in size under the control of the CPU 21.

Next, in a decision step ST7, it is determined whether or not the user is holding the pen 3 up away from the panel surface of the input tablet 2. If a NO is outputted at the step ST7, the routine proceeds to a step ST8 at which the icon (displayed as a reduced size icon) is moved, and the routine returns to the step ST7. If it is determined in the step ST7 that the user is holding the pen 3 up away from the panel surface of the input tablet 2, the routine proceeds to a step ST9 at which the icon is deactivated, after which the routine proceeds to a step ST10 in which the icon is moved to the predetermined vacant position and the processing is ended.

Since the data processing apparatus is constructed and operated as described above, the user can activate or deactivate a designated function merely by dragging the pen 3. Further, the starting and ending positions of the dragging of the pen 3 can be designated naturally, and the window position or the icon position to be enlarged can be determined with ease.

As set out above, the icon and the window can be designated by one operation in which the user touches the panel surface of the input tablet 2 with the point of the pen 3 and drags it along the panel surface of the input tablet 2 so that cumbersome operation is avoided, and the starting and ending of the dragging operation of the pen 3 can be carried out very clearly. Furthermore, various other effects, such as easy designation of a window and so on, can easily be achieved.

## Claims

1. A data processing apparatus comprising:
an input device (2) and a display device (1) mounted one upon the other;
a pen (3);
said apparatus being characterized by:
means (2, 21-S1) for detecting whether or not a point of the pen (3) is touched down;
means (21-S2) responsive to data indicative of a coordinate position at which the point of the pen (3) is initially touched down corresponding to a coordinate position at which an icon (e.g. 41) is displayed on the display device (1) to select said icon;
means (21) for controlling the icon display coordinate position such that the icon display coordinate position is moved in accordance with movement of the coordinate position of the touched-down point of the pen (3) from the initial touch down position;
means (21-S4) for detecting whether or not the coordinate position of the touched-down point of the pen (3) is then moved to a predetermined area; and
means (21-S6/S7/S9) for converting the icon (41) into a window (43) when it is detected that the point of the pen (3) is lifted off within said predetermined area.

2. A data processing apparatus comprising:
an input device (2) and a display device (1) mounted one upon the other;
a pen (3);
said apparatus being characterized by:
means (2, 21-ST1) for detecting whether or not a point of the pen (3) is touched down;
means (21-ST2) responsive to data indicative of a coordinate position at which the point of the pen (3) is initially touched down corresponding to a coordinate position at which a window (e.g. 43) is displayed on the display device (1) to select said window;
means (21) for controlling the window display coordinate position such that the window display coordinate position is moved in accordance with movement of the coordinate position of the touched-down point of the pen (3);
means (21-ST4) for detecting whether or not the coordinate position of the touched-down point of the pen (3) is then moved to a predetermined area; and
means (21-ST6/ST7/ST9) for converting the window (43) into an icon (e.g. 41) when it is detected that the point of the pen (3) is moved up within said predetermined area.

3. A method of controlling the input of information to a data processing apparatus comprising an input device (2) and a display device (1) mounted one upon the other; and a pen (3); the method comprising:
detecting whether or not a point of the pen (3) is touched down;
responding to data indicative of a coordinate position at which the point of the pen (3) is initially touched down corresponding to a coordinate position at which an icon (e.g. 41) is displayed on the display device (1) to select said icon;
controlling the icon display coordinate position such that the icon display coordinate position is moved in accordance with movement of the coordinate position of the touched-down point of the pen (3) from the initial touch down position;
detecting whether or not the coordinate position of the touched-down point of the pen (3) is then moved to a predetermined area; and
converting the icon (41) into a window (43) when it is detected that the point of the pen (3) is lifted off within said predetermined area.

4. A method of controlling the input of information to a data processing apparatus comprising an input device (2) and a display device (1) mounted one upon the other; a pen (3); the method comprising:
detecting whether or not a point of the pen (3) is touched down;
responding to data indicative of a coordinate position at which the point of the pen (3) is initially touched down corresponding to a coordinate position at which a window (e.g. 43) is displayed on the display device (1) to select said window;
controlling the window display coordinate position such that the window display coordinate position is moved in accordance with movement of the coordinate position of the touched-down point of the pen (3);
detecting whether or not the coordinate position of the touched-down point of the pen (3) is then moved to a predetermined area; and
converting the window (43) into an icon (e.g. 41) when it is detected that the point of the pen (3) is lifted off within said predetermined area.

## Patentansprüche

1. Datenverarbeitungsgerät mit
einer Eingabevorrichtung (2) und einer Anzeigevorrichtung (1), die aufeinander montiert sind, und
einem Griffel (3),
**gekennzeichnet durch**
Mittel (2, 21-S1) zur Feststellung, ob die Spitze des Griffels (3) aufgesetzt ist oder nicht,
Mittel (21-S2), die auf Daten ansprechen, die diejenige Koordinatenposition angeben, an der die Spitze des Griffels (3) zunächst aufgesetzt wird und die einer Koordinatenposition entspricht, an der ein Icon (z.B. 41) auf der Anzeigevorrichtung (1) angezeigt wird, um dieses Icon auszuwählen,
Mittel (21) zur Steuerung der Iconanzeige-Koordinatenposition derart, daß diese Iconanzeige-Koordinatenposition entsprechend der Bewegung der Koordinatenposition der aufgesetzten Spitze des Griffels (3) aus der zunächsten Aufsetzposition heraus bewegt wird,
Mittel (21-S4) zur Feststellung, ob die Koordinatenposition der aufgesetzten Spitze des Griffels (3) dann zu einem vorbestimmten Bereich bewegt wird, und
Mittel (21-S6/S7/S9) zur Umwandlung des Icons (41) in ein Fenster (43), wenn festgestellt wird, daß die Spitze des Griffels (3) innerhalb des genannten vorbestimmten Bereichs abgehoben wird.

2. Datenverarbeitungsgerät mit
einer Eingabevorrichtung (2) und einer Anzeigevorrichtung (1), die aufeinander montiert sind, und
einem Griffel (3),
**gekennzeichnet durch**
Mittel (2, 21-ST1) zur Feststellung, ob die Spitze des Griffels (3) aufgesetzt ist oder nicht,
Mittel (21-ST2), die auf Daten ansprechen, die diejenigen Koordinatenposition angeben, an der die Spitze des Griffels (3) zunächst aufgesetzt wird und die einer Koordinatenposition entspricht, an der ein Fenster (z.B. 43) auf der Anzeigevorrichtung (1) angezeigt wird, um dieses Fenster auszuwählen,
Mittel (21) zur Steuerung der Fensteranzeige-Koordinatenposition derart, daß diese Fensteranzeige-Koordinatenposition entsprechend der Bewegung der Koordinatenposition der aufgesetzten Spitze des Griffels (3) bewegt wird,
Mittel (21-ST4) zur Feststellung, ob die Koordinatenposition der aufgesetzten Spitze des Griffels (3) dann zu einem vorbestimmten Bereich bewegt wird, und
Mittel (21-ST6/S7/S9) zur Umwandlung des Fensters (43) in ein Icon (41), wenn festgestellt wird, daß die Spitze des Griffels (3) innerhalb des genannten vorbestimmten Bereichs nach oben bewegt wird.

3. Verfahren zur Steuerung der Informationseingabe in ein Datenverarbeitungsgerät mit einer Eingabevorrichtung (2) und einer Anzeigevorrichtung (1), die aufeinander montiert sind, und mit einem Griffel (3), wobei das Verfahren umfaßt:
das Feststellen, ob die Spitze des Griffels (3) aufgesetzt ist oder nicht,
das Ansprechen auf Daten, die diejenige Koordinatenposition angeben, an der die Spitze des Griffels (3) zunächst aufgesetzt wird und die einer Koordinatenposition entspricht, an der ein Icon (z.B. 41) auf der Anzeigevorrichtung (1) angezeigt wird, um dieses Icon auszuwählen,
das Steuern der Iconanzeige-Koordinatenposition derart, daß diese Iconanzeige-Koordinatenposition entsprechend der Bewegung der Koordinatenposition der aufgesetzten Spitze des Griffels (3) aus der zunächsten Aufsetzposition heraus bewegt wird,
das Feststellen, ob die Koordinatenposition der aufgesetzten Spitze des Griffels (3) dann zu einem vorbestimmten Bereich bewegt wird, und
das Umwandeln des Icons (41) in ein Fenster (43), wenn festgestellt wird, daß die Spitze des Griffels (3) innerhalb des genannten vorbestimmten Bereichs abgehoben wird.

4. Verfahren zur Steuerung der Informationseingabe in ein Datenverarbeitungsgerät mit einer Eingabevorrichtung (2) und einer Anzeigevorrichtung (1), die aufeinander montiert sind, und mit einem Griffel (3), wobei das Verfahren umfaßt:
das Feststellen, ob die Spitze des Griffels (3) aufgesetzt ist oder nicht,
das Ansprechen auf Daten, die diejenige Koordinatenposition angeben, an der die Spitze des Griffels (3) zunächst aufgesetzt wird und die einer Koordinatenposition entspricht, an der ein Fenster (z.B. 43) auf der Anzeigevorrichtung (1) angezeigt wird, um dieses Fenster auszuwählen,
das Steuern der Fensteranzeige-Koordinatenposition derart, daß diese Fensteranzeige-Koordinatenposition entsprechend der Bewegung der Koordinatenposition der aufgesetzten Spitze des Griffels (3) bewegt wird,
das Feststellen, ob die Koordinatenposition der aufgesetzten Spitze des Griffels (3) dann zu einem vorbestimmten Bereich bewegt wird, und
das Umwandeln des Fensters (43) in ein Icon (41), wenn festgestellt wird, daß die Spitze des Griffels (3) innerhalb des genannten vorbestimmten Bereichs nach oben bewegt wird.

## Revendications

1. Appareil de traitement de données comprenant :
un dispositif d'entrée (2) et un dispositif d'affichage (1) montés l'un sur l'autre ;
un crayon (3) ;
ledit dispositif étant caractérisé par :
un dispositif (2, 21-S1) pour détecter si oui ou non une pointe du crayon (3) est appuyée ;
un dispositif (21-S2) sensible aux données indicatives d'une position de coordonnées dans laquelle la pointe du crayon (3) est initialement appuyée correspondant à une position de coordonnées dans laquelle une icône (par exemple 41) est affichée sur le dispositif d'affichage (1) pour sélectionner ladite icône ;
un dispositif (21) pour commander la position de coordonnées d'affichage d'icône pour que la position de coordonnées d'affichage d'icône soit déplacée selon le déplacement de la position de coordonnées de la pointe appuyée du crayon (3) à partir de la position d'appui initiale ;
un dispositif (21-S4) pour détecter si oui ou non la position de coordonnées de la pointe appuyée du crayon (3) est alors déplacée vers une zone prédéterminée ; et
un dispositif (21-S6/S7/S9) pour convertir l'icône (41) en une fenêtre (43) lorsqu'on détecte que la pointe du crayon (3) est soulevée dans ladite zone prédéterminée.

2. Appareil de traitement de données comprenant :
un dispositif d'entrée (2) et un dispositif d'affichage (1) montés l'un sur l'autre ;
un crayon (3) ;
ledit dispositif étant caractérisé par :
un dispositif (2, 21-ST1) pour détecter si oui ou non une pointe du crayon (3) est appuyée ;
un dispositif (21-ST2) sensible aux données indicatives d'une position de coordonnées dans laquelle la pointe du crayon (3) est initialement appuyée correspondant à une position de coordonnées dans laquelle une fenêtre (par exemple 43) est affichée sur le dispositif d'affichage (1) pour sélectionner ladite fenêtre ;
un dispositif (21) pour commander la position de coordonnées d'affichage de fenêtre pour que la position de coordonnées d'affichage de fenêtre soit déplacée selon le déplacement de la position de coordonnées de la pointe appuyée du crayon (3) ;
un dispositif (21-ST4) pour détecter si oui ou non la position de coordonnées de la pointe appuyée du crayon (3) est alors déplacée vers une zone prédéterminée ; et
un dispositif (21-ST6/ST7/ST9) pour convertir la fenêtre (43) en une icône (par exemple 41) lorsqu'on détecte que la pointe du crayon (3) est soulevée dans ladite zone prédéterminée.

3. Procédé de commande de l'entrée d'informations dans un appareil de traitement de données comprenant un dispositif d'entrée (2) et un dispositif d'affichage (1) montés l'un sur l'autre ; et un crayon (3), le procédé comprenant :
une détection de si oui ou non une pointe du crayon (3) est appuyée ;
une réponse aux données indicatives d'une position de coordonnées dans laquelle la pointe du crayon (3) est initialement appuyée correspondant à une position de coordonnées dans laquelle une icône (par exemple 41) est affichée sur le dispositif d'affichage (1) pour sélectionner ladite icône ;
une commande de la position de coordonnées d'affichage d'icône pour que la position de coordonnées d'affichage d'icône soit déplacée selon un déplacement de la position de coordonnées de la pointe appuyée du crayon (3) à partir de la position appuyée initiale ;
une détection de si oui ou non la position de coordonnées de la pointe appuyée du crayon (3) est alors déplacée vers une zone prédéterminée ; et
une conversion de l'icône (41) en une fenêtre (43) lorsqu'on détecte que la pointe du crayon (3) est soulevée dans ladite zone prédéterminée.

4. Procédé de commande de l'entrée d'informations dans un appareil de traitement de données comprenant un dispositif d'entrée (2) et un dispositif d'affichage (1) montés l'un sur l'autre ; un crayon (3), le procédé comprenant :
une détection de si oui ou non une pointe du crayon (3) est appuyée ;
une réponse aux données indicatives d'une position de coordonnées dans laquelle la pointe du crayon (3) est initialement appuyée correspondant à une position de coordonnées dans laquelle une fenêtre (par exemple 43) est affichée sur le dispositif d'affichage (1) pour sélectionner ladite fenêtre ;
une commande de la position de coordonnées d'affichage de fenêtre pour que la position de coordonnées d'affichage de fenêtre soit déplacée selon un déplacement de la position de coordonnées de la pointe appuyée du crayon (3) ;
une détection de si oui ou non la position de coordonnées de la pointe appuyée du crayon (3) est alors déplacée vers une zone prédéterminée ; et
une conversion d'une fenêtre (43) en une icône (par exemple 41) lorsqu'on détecte que la pointe du crayon (3) est soulevée dans ladite zone prédéterminée.
